Europäisches Patentamt

European Patent Office

Office européen des brevets

(19)

(11) Publication number: **0 040 934**
A1

(12) # EUROPEAN PATENT APPLICATION

(21) Application number: **81302157.3**

(22) Date of filing: **14.05.81**

(51) Int. Cl.³: **C 08 J 9/04, C 08 L 23/02**

(30) Priority: **19.05.80 US 150875**

(43) Date of publication of application: **02.12.81**
Bulletin 81/48

(84) Designated Contracting States: **DE FR GB IT**

(71) Applicant: **UNIROYAL, INC., 1230 Avenue of the Americas Rockefeller Center, New York, New York 10020 (US)**

(72) Inventor: **Johnson, John R., 379 Smith Pond Road Watertown, Litchfield Connecticut 06795 (US)**

(74) Representative: **Harrison, Michael Robert et al, URQUHART-DYKES & LORD 11th Floor Tower House Merrion Way, Leeds LS2 8PB (GB)**

(54) Expandable thermoplastic composition and method for preparing an expandable article therefrom.

(57) An expandable thermoplastic composition includes (A) a thermoplastic elastomer, (B) a poly-alpha-olefin resin and (C) a blowing agent. (A) is a partially cured blend of (a) mono-olefin copolymer rubber and (b) poly-alpha-olefin resin. A method for preparing an expanded thermoplastic article from the composition is described.

EP 0 040 934 A1

## EXPANDED THERMOPLASTIC COMPOSITION AND
## METHOD FOR PREPARING AN EXPANDED ARTICLE THEREFROM

This invention relates to an expandable thermoplastic composition, a method of making an expanded thermoplastic composition, and an expanded article produced by such method.

The invention is based on the discovery that unexpected and significant advantages flow from employing, as an expandable "EMT" (elastomer-modified thermoplastic), a composition comprising a blend of:

(A) a previously partially crosslinked "TPE" (thermoplastic elastomer) comprising

(a) 50 to 90 percent by weight of ethylene-propylene elastomer, and

(b) 50 to 10 percent by weight of poly-alpha-olefin resin;

(B) additional crystalline poly-alpha-olefin resin, added subsequently to the partial cross-linking of (A), to establish an overall resin/elastomer ratio of 99/5 to 55/45 by weight; and

(C) a blowing agent in an amount sufficient to expand the blend of (A) plus (B).

It will be understood that in the practice of the invention the additional poly-alpha-olefin resin (B) is added subsequently to the partial cross-linking of (A), that is, (B) is added subsequently to and separately from the step of partially cross-linking the ethylene-propylene rubber/poly-alpha-olefin blend [(a) plus (b) blend] to prepare the thermoplastic elastomer (A).

The method of the invention comprises submitting the described mixture to conditions causing the blowing agent (C) to expand the blend.

Various advantages of the invention become evident upon comparing, for example, injected molded foam based on the above-described blend of (A), (B) and (C), with injection molded foam based on a mechanical blend of ethylene-propylene rubber with poly-alpha-olefin resin which has not been partially cross-linked

0040934

(and which contains the same over-all resin: rubber ratio). Similarly, diverse advantages of the invention become manifest upon comparing the invention with injection molded foam based on a blend of ethylene-propylene rubber with poly-alpha-olefin resin (same over-all resin: rubber ratio) which has been partially cross-linked in toto.

Thus, as indicated, in the invention composition a TPE (A) based on a partially cross-linked blend of (a) ethylene-propylene rubber and (b) poly-alpha-olefin resin having less than the finally desired resin content is subsequently blended, after the partial cross-linking step, with (B) additional poly-alpha-olefin resin to bring the over-all resin content up to the level desired in the final EMT (elastomer modified thermoplastic). This makes possible the following surprising advantages compared to a mechanical uncrosslinked blend of ethylene-propylene rubber and poly-alpha-olefin resin:

- Significantly more weight reduction and uniformity;
- More uniform cell structure and skin thickness;
- Improved surface smoothness;
- Reduction in surface imperfections such as splay marks;
- Improved dimensional stability (no post blow);
- Better shot-to-shot reproducibility;
- Shorter cycle times especially when producing large and/or geometrically complex parts.

Furthermore, the invention makes possible the following advantages over partially cross-linked blend of ethylene-propylene rubber and poly-alpha-olefin resin having the same overall resin/rubber ratio:

- Essentially no odor;
- Significantly better surface smoothness;
- Reduction in surface imperfections;
- Greater weight reduction;
- No mold residue;
- More uniform cell structure and skin thickness;
- Significantly better fill of the mold, and shot-to-shot uniformity;
- Improved dimensional stability (no post blow).

The thermoplastic elastomer (A) employed in the invention is a conventional material, made for example as described in U.S. patents 3,758,643, Fischer, Sept. 11,1973, 3,806,558, Fischer, April 23, 1974, or 4,031,169, Morris, June 21, 1977, the disclosures of which are incorporated herein by reference. Such a TPE (A) may be described as a blend of (a) mono-olefin copolymer elastomer with (b) poly-alpha-olefin resin which has been partially cross-linked with the aid of a curing agent such as a peroxide, typically in a dynamic partial curing operation; the cross-linking is carried out only to an extent that will not prevent the material becoming knit together into a coherent mass when processed on conventional rubber or plastic processing machinery. The mono-olefin copolymer rubber (a) is typically either an ethylene-propylene copolymer or an ethylene-propylene-non-conjugated diene terpolymer (made, for example, from such non-conjugated dienes as dicyclopentadiene, 5-ethylidene-2-norbornene, 1,4-hexadiene, etc.). The resin (b) is usually polyethylene or polypropylene.

Likewise, the additional poly-alpha-olefin resin (B) is ordinarily polyethylene or polypropylene.

Blowing agents (C) suitable for carrying out the invention include physical and chemical blowing agents, and they may be solid, liquid or gaseous substances. Physical blowing agents include volatile liquids such as pentane, hexane, methylene chloride and trichlorofluoromethane, and gases such as nitrogen and carbon dioxide. Chemical blowing agents are usually solids which, when heated to a specific temperature, decompose producing a large amount of gaseous products such as carbon dioxide, nitrogen, and a solid residue. Well known chemical blowing agents are sodium bicarbonate, p,p'-oxybis(benzenesulfonyl hydrazide), azodicarbonamide, p-toluenesulfonyl semicarbazide, 5-phenyltetrazole, trihydrazine triazine. To these chemical blowing agents may be added activators and nucleating agents, as is well known in the art.

There is a great variety of articles that may be manufactured using the composition of this invention such as refrigerator doors, automotive body parts, containers, panelling, furniture, packaging, battery cases, wind deflectors, aircraft interior members and others. To make such articles, the composition of the invention is prepared, and typically introduced into an appropriate mold of the desired size and shape. When the composition is heated, the blowing agent causes the heat-softened material to expand and fill the mold, thus forming a foamed or cellular article of the desired size and shape.

The following examples, in which all quantities are expressed by weight unless otherwise indicated, will serve to illustrate the practice of the invention in more detail.

## Example I

Blends having the composition indicated in Table I may be prepared, using the following ingredients:

EPDM: rubbery terpolymer containing 50% ethylene, 45% propylene and 5% dicyclopentadiene, having a Mooney viscosity (ML-4) of 60 at 125°.

PP: polypropylene melt flow index 4.

SMB: stabilizer master batch containing 15 parts tetrakis methylene 3-(3,5-di-t-butyl-4-hydroxylphenyl)propionate methane, 60 parts dilaurylthio dipropionate, 25 parts 2-(3,5-di-t-butyl-2-didroxphenyl)-5-chlorobenzotriazole, and 20 parts magnesium oxide.

PO: curative, dicumylperoxide.

BA: blowing agent, azodicarbonamide.

TPE: partially cured thermoplastic elastomer may be prepared according to the method disclosed in U.S. patent 3,806,558 using 60 parts of the EPDM, 40 parts of the PP and 0.7 parts of PO. This TPE may be stabilized with 1.2 parts of SMB stabilizer master batch. The TPE has a gel content of about 80 percent when measured by immersion in cyclohexane for 48 hours at 72°F, and exhibits these physical properties: Tensile strenght, 1100 psi; elongation, 480%; Shore D Hardness, 39.

Run 1 in Table I may be carried out in the following manner: EPDM bale rubber, diced PP and the SMB are blended together in an internal Banbury (trademark) mixer in the absence of curatives for 10 minutes at a temperature of from 330 to 350°F (165-170°C). The resultant blend is sheeted and diced. Subsequently, blowing agent is dry tumble-blended with the blend and injection molded, using a No. 1 Negri Bossi (trademark) injection molding machine at these temperatures: front 440°F (227°C), center 440°F and rear 440°F. The 4.5 x 4.5 x 0.375 inch (11.43 x 11.43 x 0.95 cm) mold is kept at 70°F (21°C). Time for injection is 8 seconds at a 300 psi (2100 kPa) pressure, after which the blend remains in the mold for 2.25 minutes, then the mold is opened and the molded article removed.

Runs 2 and 4 are conducted in essentially the same fashion as Run 1 except peroxide and sulfur curatives (in the amounts indicated in Table I) are added to the EPDM and PP when mixing in the internal mixer. Runs 3 and 5 are carried out as follows: diced TPE, diced PP and blowing agent are thoroughly dry tumble-blended, and the mixture injection molded under the conditions outlined above.

Runs 1, 2 and 4 are outside the invention; Runs 2 and 4 are essentially partially cured according to the teaching of Example 1 of German patent publication (Offenlegungsschrift) No. 1,544,684. September 18, 1969; Runs 3 and 5 represent the practice of the invention.

The results shown in Table I call for the following observations:

Comparison of Run 3 (this invention) vs. Run 1 (non-cured example):

Run 3 exhibits greater ease of expansion and sample uniformity, no post expansion, improved cell structure, essentially no splay marks and improved surface texture.

Comparison of Run 3 (this invention) vs. Run 2 (partially cured comparison):

Run 3 shows these improvements: mold completely filled, no buildup of mold residue, much more uniform cell structure, no discoloration, no odor, much smoother surface texture and essentially no splay marks.

Comparison of Run 5 (this invention) vs. Run 4 (partially cured comparison):

The improvements of Run 5 over Run 4 indicate substantially the same trend as Run 3 over Run 2.

In summary, the results clearly indicate the superior advantages obtained from blends of this invention over those prepared by other methods.

0040934

## TABLE I - Expanded EMT

| Ingredients (parts) Run No: | 1 | 2 | 3 | 4 | 5 |
|---|---|---|---|---|---|
| EPDM | 20 | 20 | -- | 40 | -- |
| TPE | -- | -- | 33.3 | -- | 66.7 |
| PP | 80 | 80 | 66.7 | 60 | 33.3 |
| PO | -- | 0.3 | -- | 0.3 | -- |
| Sulfur | -- | 0.5 | -- | 0.5 | -- |
| BA | 0.5 | 0.5 | 0.5 | 0.5 | 0.5 |
| SMB | 1.2 | 1.2 | 1.2[1] | 1.2 | 1.2[1] |
| EPDM/PP, overall | 20/80 | 20/80 | 20/80 | 40/60 | 40/60 |

| Results | | | | | |
|---|---|---|---|---|---|
| Sample, weight, g[2] | 105 | -[3] | 75 | -[3] | 100 |
| Weight variation, g[2] | ±7.5 | -[3] | ±0 | -[3] | ±3 |
| Expansion, % | 5 | -[3] | 32 | -[3] | 10 |
| Impact @ -40°C[4] | 3 | 3 | 3 | 18 | 27 |
| Mold filled | yes | no | yes | no | yes |
| Residue buildup | no | yes | no | yes | no |
| Post expansion[5] | yes | yes | no | yes | no |
| Cell structure | fair | irregular | good | irregular | good |
| Color | natural | dark brown | natural | dark brown | natural |
| Odor | none | pungent | none | pungent | none |
| Surface texture | rough | rough | smooth | rough | smooth |
| Splay marks | yes | yes | minimal | yes | minimal |

Remarks

(1) SMB added to TPE

(2) Based on five pieces fabricated

(3) Not measurable because mold not filled

(4) According to ASTM D-2444 (falling dart)

(5) Expansion continued after mold was opened.

## EXAMPLE II

An experiment was conducted using nitrogen gas as a blowing agent (ingredients used are as indicated in Example I):

| Run No. 6 | Parts (Weight) |
|---|---|
| TPE | 66.7 |
| PP | 33.3 |
| SMB | 1.2* |
| EPDM/PP, overall | 40/60 |

\* added originally to TPE

TPE and PP were dry tumble-blended as described in Example I. The resultant mixture was fed to a 300 ton Uniloy Springfield (trademark) injection molding machine of the screw accumulator and ram type, having a material capacity of 70 lbs (32 kg).

Nitrogen under pressure (900 psi; 6300 k Pa) was introduced into the center of the screw prior to transferring the mixture into the accumulator. Molding machine temperature was 470°F (243°C) throughout; mold temperature: 70°F (21°C).

Results:

| | |
|---|---|
| Cell structure | good |
| Surface | smooth |
| Impact @ -40°C | 85 |
| Flex Modules | 67,000 psi (470) MPa) |

\* Falling Dart, ASTM D-2444

0040934

- 1 -

CLAIMS:

1. An expandable thermoplastic composition characterised in that the composition comprises a blend of

(A) partially cross-linked thermoplastic elastomer comprising

(a) 50 to 90 percent by weight ethylene-propylene elastomer, and

(b) 50 to 10 percent by weight crystalline poly-alpha-olefin resin

(B) additional crystalline poly-alpha-olefin resin subsequently added to (A) to establish an overall resin/elastomer ratio of 95/5 to 55/45 by weight, and

(C) a blowing agent in an amount sufficient to expand the blend of (A) plus (B).

2. A composition according to claim 1 characterised in that (a) is selected from ethylene-propylene copolymer and ethylene-propylene-non-conjugated diene terpolymer, and said resin is selected from polyethylene and polypropylene.

3. A composition according to claim 2 characterised in that said non-conjugated diene is dicyclopentadiene, 5-ethylidene-2-norbornene or 1,4-hexadiene.

4. A composition according to claim 2 or claim 3 characterised in that said resin is polypropylene.

5. A method for preparing an expanded thermoplastic article characterised in that the method comprises providing the expandable thermoplastic composition as claimed in any of the preceding claims and heating the composition to a temperature sufficient to cause the said blowing agent to expand the blend.

## DOCUMENTS CONSIDERED TO BE RELEVANT

| Category | Citation of document with indication, where appropriate, of relevant passages | Relevant to claim |
|---|---|---|
| X | FR - A - 2 392 072 (MITSUI PETRO-CHEMICAL INDUSTRIES) (published December 22, 1978)<br><br>* claims 27,29,34,45-49; page 25, line 1 - page 27; page 20, lines 20 to 23; pages 74-84 *<br><br>& GB - A - 1 590 240<br><br>--- | 1-5 |
| A | FR - A - 2 006 957 (SUMITOMO CHEMICALS)<br><br>* claims *<br><br>--- | 1-5 |
| A | DE - A - 2 140 525 (SANWA KAKO)<br><br>* claims 1,5; page 9, paragraph 1 *<br><br>& GB - A - 1 355 383<br><br>--- | 1,4,5 |
| D/A | US - A - 3 806 558 (W.K. FISCHER)<br><br>* claim 1 * | 1-4 |

**CLASSIFICATION OF THE APPLICATION (Int. Cl.³)**

C 08 J 9/04
C 08 L 23/02

**TECHNICAL FIELDS SEARCHED (Int. Cl.³)**

C 08 J 9/10
9/14
9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01-09-1981 | HALLEMEESCH |

EPO Form 1503.1  06.78